# DEMANDE DE BREVET EUROPEEN

(11) **EP 3 339 154 A1**
(43) Date de publication de la demande: **27.06.2018**
(21) Numéro de dépôt: 17208081.4
(22) Date de dépôt: 18.12.2017
(51) Int. Cl.: B62K 19/36, B62K 5/02, B62K 5/06, B62J 1/00

(54) **SYSTÈME DE SIÈGE POUR VÉHICULE LÉGER**

(30) Priorité: 19.12.2016 FR 1662723
(71) Demandeur: Cyclopolitain, 69001 Lyon (FR)
(72) Inventeur: DEVEZE, Alain, 69560 Saint Romain en Gal (FR)
(74) Mandataire: Chevalier, Renaud Philippe

(57) **Abrégé**

L'invention a pour objet un système de siège pour un véhicule léger équipé d'un pédalier assurant son entraînement, ce système comprenant des réglages de position du siège (12), étant remarquable en ce qu'il comporte des montants (16) prévus pour être fixés dans le véhicule, présentant chacun dans la direction longitudinale du véhicule une extrémité inférieure décalée vers l'avant par rapport à l'extrémité supérieure, donnant une inclinaison à ces montants, et en ce que le siège (12) comporte un système de fixation réglable à différentes

## Description

La présente invention concerne un système de siège pour un véhicule léger disposant d'un pédalier pour sa propulsion, ainsi qu'un véhicule léger équipé d'un tel système de siège.

Les véhicules légers entraînés par le conducteur utilisant un pédalier, doivent présenter une masse très réduite afin de limiter l'effort fourni.

Un type de véhicule connu équipé d'une roue à l'avant et de deux roues à l'arrière, comporte une place avant pour le conducteur disposant d'un pédalier, et deux places arrière permettant de transporter de manière confortable des personnes sur des petites distances. Ce type de véhicule se développe en particulier dans les zones piétonnières ou touristiques, où la circulation des véhicules à moteur est fortement réduite pour limiter le bruit et la pollution afin d'assurer un agrément élevé pour les piétons.

Ces véhicules peuvent disposer d'une carrosserie comprenant à l'avant un pare-brise qui se continue vers l'arrière par un pavillon couvrant le conducteur et les passagers, afin de les mettre à l'abri du soleil, de la pluie ou du vent pour assurer un meilleur confort.

Afin d'optimiser la position du conducteur lui permettant de développer plus facilement un effort sur le pédalier, il est connu de disposer le siège de ce conducteur sur des coulisses longitudinales, réalisant un réglage de sa distance par rapport au guidon de la direction et au pédalier.

En effet il est nécessaire lors de la rotation des pédales de pouvoir développer suffisamment les jambes, afin de délivrer le meilleur effort dessus.

Toutefois dans ce cas si l'on veut réaliser aussi un réglage en hauteur du siège, afin d'assurer un confort du conducteur, il faut prévoir alors un autre système coulissant ou pivotant permettant de relever ce siège.

Ces différents systèmes de réglage du siège dans deux directions entraînent alors une complexité, qui augmente la masse du véhicule ainsi que les coûts.

De plus ce type de véhicule peut être utilisé chaque jour par différents conducteurs, par exemple pour déplacer des personnes dans un centre-ville. Une manoeuvre fréquente d'un double réglage du siège fini par prendre un temps assez conséquent.

La présente invention a notamment pour but de résoudre ces problèmes.

Elle propose à cet effet un système de siège pour un véhicule léger équipé d'un pédalier assurant son entraînement, ce système comprenant des réglages de position du siège, étant remarquable en ce qu'il comporte des montants prévus pour être fixés dans le véhicule, présentant chacun dans la direction longitudinale du véhicule une extrémité inférieure décalée vers l'avant par rapport à l'extrémité supérieure, donnant une inclinaison à ces montants, et en ce que le siège comporte un système de fixation réglable à différentes hauteurs sur ces montants.

Un avantage de ce système de siège est que les montants inclinés vers l'avant en descendant, constituent à la fois un support pour le siège, et un guidage de son réglage permettant simultanément en descendant ce siège une avance vers l'avant.

On permet ainsi avec un unique moyen de réglage et de fixation suivant la hauteur des montants, une manoeuvre simple et rapide donnant aux personnes plus petites en descendant ce siège à la fois un siège plus près du pédalier, et aux personnes plus grandes en montant ce siège à la fois un siège plus éloigné de ce pédalier.

Le système de siège selon l'invention peut comporter de plus une ou plusieurs des caractéristiques suivantes, qui peuvent être combinées entre elles.

Avantageusement, le système comporte deux montants disposés parallèlement, présentant chacun une section circulaire.

Avantageusement, l'inclinaison des montants vers l'avant présente par rapport à la verticale un angle compris entre 0 et 40°, qui est plus important en descendant.

Avantageusement, la face arrière du siège comporte des rainures parallèles de guidage s'ajustant sur les montants.

Avantageusement, le système de fixation réglable comporte un dispositif de blocage en hauteur sur les montants ne nécessitant pas d'outil pour la manoeuvre.

Selon un mode de réalisation, le dispositif de blocage en hauteur comporte des vis équipées de molettes ajustées dans des rainures verticales, qui serrent le siège sur les montants.

Selon un autre mode de réalisation, le dispositif de blocage en hauteur comporte une série de crans liés aux montants, espacés en hauteur, présentant une ouverture supérieure tournée vers l'avant recevant un crochet fixé à l'arrière du siège.

Avantageusement, le siège comporte une structure rigide qui est métallique.

Dans ce cas, le siège peut comporter une coque avant et une coque arrière réalisées par un moulage d'une matière plastique, recevant entre elles la structure rigide.

L'invention a aussi pour objet un véhicule léger équipé d'un pédalier assurant son entraînement, comportant pour le conducteur un système de siège comprenant l'une quelconque des caractéristiques précédentes.

L'invention sera mieux comprise et d'autres caractéristiques et avantages apparaîtront plus clairement à la lecture de la description ci-après, donnée à titre d'exemple en référence aux dessins annexés dans lesquels :
- la figure 1 est une vue de côté d'un véhicule léger à pédales équipé d'un système de siège suivant l'invention, le siège étant dans une position haute ;
- la figure 2 est une vue en coupe axiale suivant un plan longitudinal de ce système de siège ;
- la figure 3 est une vue éclatée de ce système de siège ;
- la figure 4 est une vue de côté présentant le siège en position basse ;
- la figure 5 est une vue d'un système de siège suivant une variante ;
- la figure 6 est une vue en coupe suivant un plan médian longitudinal de ce système de siège ; et
- la figure 7 est une vue de détail en coupe suivant un plan médian longitudinal de la fixation de ce système de siège.

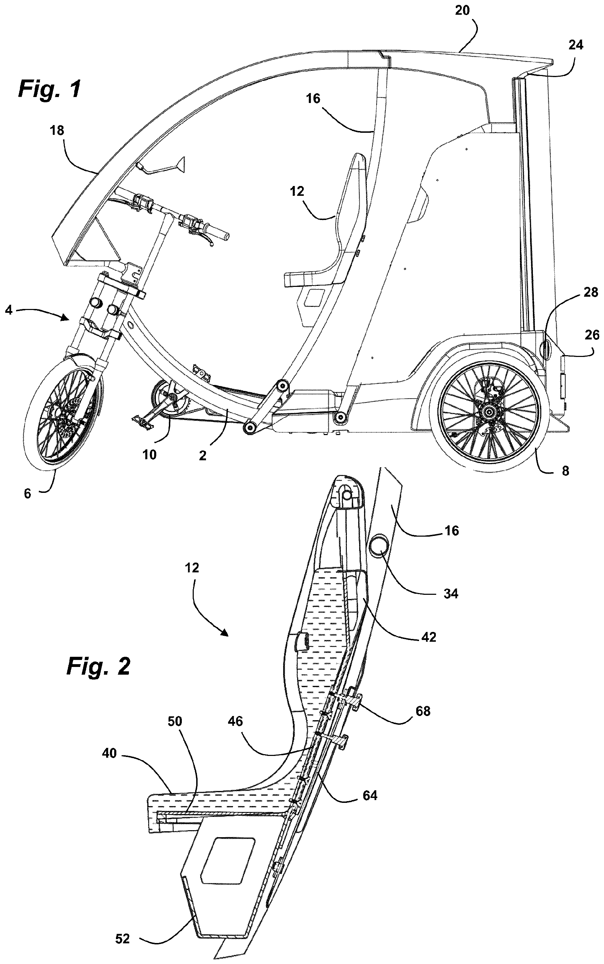

La figure 1 présente un véhicule à pédales comportant un châssis 2 recevant à l'avant une fourche 4 de guidage d'une roue avant 6, et à l'arrière un essieu supportant deux roues arrière 8. Une place centrale avant pour le conducteur comporte un siège avant 12, et un pédalier 10 entraînant par une chaîne les roues arrière 8.

L'arrière du véhicule comporte une banquette prévue pour recevoir deux personnes.

Le véhicule est équipé d'une carrosserie légère supportée par une ossature tubulaire, comprenant un pare-brise 18 se terminant vers l'avant par une pointe, remontant ensuite jusqu'au-dessus du conducteur. Un pavillon 20 prolongeant le pare-brise 18, réalisé par le rotomoulage d'une matière plastique, comporte une fenêtre de toit 22, et un rebord arrière 24 formant à l'arrière un bandeau transversal qui redescend sur une petite hauteur.

La carrosserie comporte en dessous des passagers un caisson arrière 26 réalisé par le rotomoulage d'une matière plastique, qui se termine par un bandeau arrière supportant des feux 28 et une plaque d'identification du véhicule.

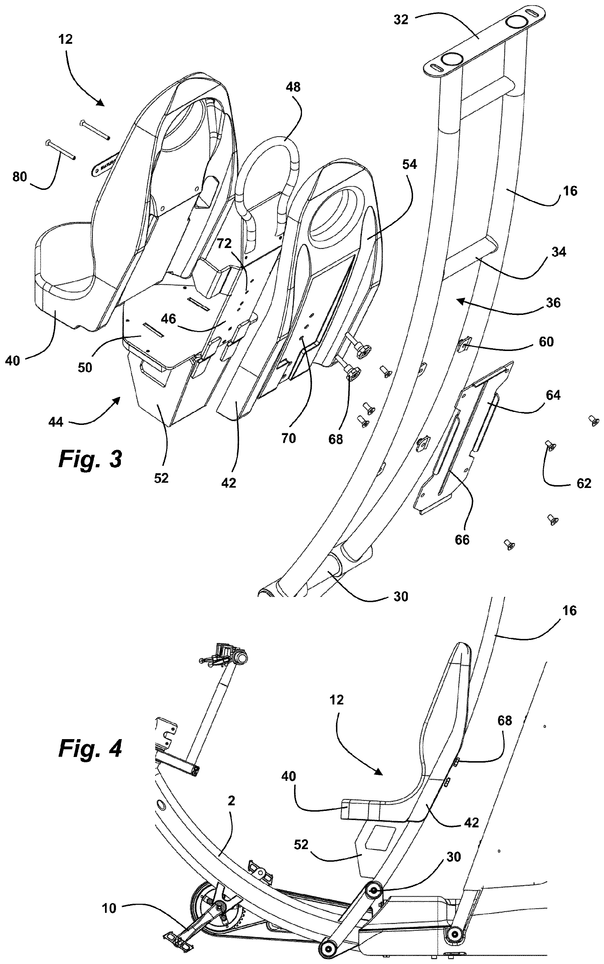

Les figures 2, 3 et 4 présentent deux montants 16 parallèles sensiblement verticaux, formés chacun par un tube de section circulaire, fixés en bas au châssis par des traverses de fixation 30 reliant ces tubes entre eux, et en haut par une plaque horizontale 32 qui soutient le pavillon 20 du véhicule.

Les deux montants sont reliés aussi par deux traverses de rigidification 34, disposées au-dessus du siège du conducteur 12 afin de dégager un espace libre 36 entre les montants 16 derrière ce siège.

Les montants 16 comportent en vue de côté une courbure générale régulière qui est esthétique, comprenant une partie supérieure sensiblement verticale, et un cintrage vers l'avant en descendant de manière à présenter une partie inférieure inclinée d'environ 35° par rapport à cette vertical.

Le siège 12 comporte une coque avant 40 et une coque arrière 42 réalisées par rotomoulage d'une matière plastique, séparées par une structure rigide 44 réalisée avec des tôles métalliques pliées. La coque avant 40 est fixée sur la structure rigide 44 par des vis de fixation 80 traversant cette coque.

La structure rigide 44 comporte une tôle arrière 46 sensiblement verticale, recevant un arceau supérieur métallique 48 formé par un tube cintré, qui supporte la partie supérieure des coques 40, 42 en laissant un perçage central dans cet arceau. L'arceau supérieur forme aussi une poignée permettant d'engager la main dans le perçage central afin de soulever le siège 12.

La structure rigide 44 comporte une tôle d'assise 50 soutenue par un caisson 52 comprenant une partie arrière fixée sur la tôle arrière 46, afin de former une assise rigide permettant de supporter la masse du conducteur.

La structure rigide 44 étant entièrement enserrée par les deux coques 40, 42, elle n'apparaît pas ce qui évite de se blesser sur les tôles de cette structure, et donne à l'ensemble une esthétique soignée.

La face arrière de la coque arrière 42 comporte deux rainures verticales parallèles de guidage 54, présentant un contour prévu pour s'adapter sur le côté avant des montants 16 en coulissant dessus.

Chaque montant 16 comporte dans l'espace libre 36 entre eux, deux pattes de fixation 60 qui sont alignées sur des pattes de l'autre montant. Une tôle arrière de fixation 64 présentant une forme globalement rectangulaire, vient à l'arrière des pattes 60 pour être fixée dans chaque angle sur une patte par une vis 62.

La tôle de fixation 64 comporte des bords pliés de manière à augmenter sa rigidité, et une fente centrale verticale 66 s'étendant sur presque toute sa hauteur.

Deux molettes de serrage 68 comportent chacune une vis engagée successivement en partant de l'arrière dans la fente 66 de la tôle de fixation 64, puis dans des perçages 70 de la coque arrière 42, et enfin dans des perçages taraudés 72 de la structure rigide 44.

Le fonctionnement du système de siège est le suivant. En desserrant légèrement les molettes de serrage 68 le conducteur peut de manière simple et rapide, sans outil, abaisser le siège 12 en le laissant descendre par gravité, ou le lever en attrapant la poignée formée par son arceau supérieur 48.

Les rainures de guidage 54 de la coque arrière 42 coulissent alors sur les montants 16, en guidant l'ensemble du siège 12 suivant la courbure de ces montants. Les vis des molettes de serrage 68 coulissent librement dans la fente 66 de la tôle de fixation 64. Arrivé à la hauteur souhaitée, le conducteur resserre les deux molettes de serrage 68.

On obtient alors par un seul mouvement causé par une unique intervention, à la fois un réglage en hauteur et en profondeur du siège 12, qui permet simultanément de l'avancer en l'abaissant ou de le reculer en le montant pour s'adapter à la taille du conducteur.

On notera que le siège 12 coulissant sur les montants 16 par les rainures de guidage 54 formées dans la matière plastique, ne risque pas de rayer ni d'abîmer un revêtement de ces montants. On notera aussi que les deux montants parallèles 16 donnent au siège 12 un bon calage délivrant une stabilité en torsion.

De plus les montants 16 présentent un appui permettant aux passagers de se tenir lorsqu'ils montent et descendent de l'habitacle. Les montants 16 peuvent aussi servir de support pour la fixation d'éléments de communication à destination des passagers, comme une tablette ou un porte-flyers.

En variante les montants 16 peuvent être rectilignes, en présentant une inclinaison donnant une extrémité basse plus en avant que l'extrémité haute.

En complément les montants 16 peuvent présenter en partie basse une forme particulière comme une courbure plus prononcée ou un écartement, qui réalise un blocage du siège arrivant en position basse afin de former une butée de fin de course.

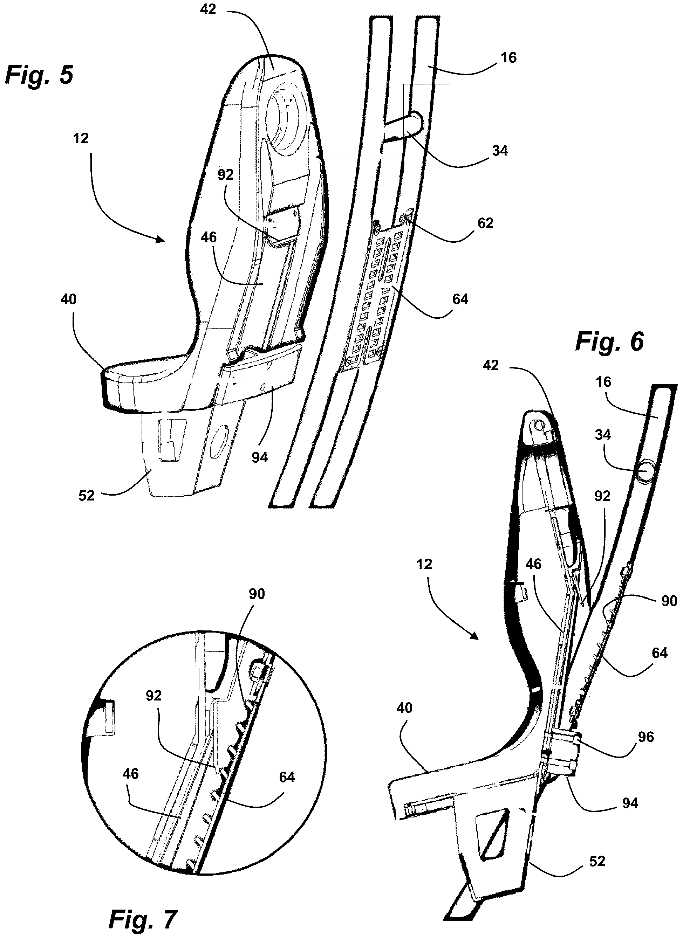

Les figures 5, 6 et 7 présentent en variante une tôle de fixation 64 comportant des crans 90 réalisés par découpage de la tôle, formant des languettes présentant un côté supérieur légèrement incliné vers l'avant. Les crans 90 sont répartis suivant deux colonnes alignées verticalement, disposées de manière symétrique par rapport au plan médian longitudinal du véhicule.

La tôle arrière 46 de la structure rigide 44 supporte vers le haut un crochet 92 formé par une tôle dont la base s'écarte légèrement vers l'arrière par rapport à cette tôle arrière, qui s'engage dans deux crans alignés 90 des deux colonnes.

La base de la coque arrière 42 comporte une traverse de guidage 94 formée en matière plastique moulée, comprenant une partie transversale prévue pour venir en arrière des deux montants 16, et une partie centrale de liaison fixée sur la structure rigide 44 du siège 12 par deux vis arrière 96.

Les deux montants 16 sont ajustés entre la coque arrière 42 et la traverse de guidage 94, de chaque côté de la partie centrale de liaison, avec un petit jeu permettant un coulissement sur les montants 16, ainsi qu'une légère inclinaison du siège 12 vers l'avant par rapport à ces montants.

Pour réaliser de manière simple et rapide un réglage du positionnement du siège 12 sans outil, l'opérateur saisi la poignée supérieure de ce siège, et le soulève légèrement en l'inclinant vers l'avant par un pivotement au niveau de la traverse de guidage 94, pour sortir le crochet supérieur 92 des crans 90 inclinés vers l'avant.

Ensuite après avoir disposé le siège 12 à la bonne hauteur, l'opérateur recule sa partie supérieure pour engager le crochet 92 dans les deux crans 90 se trouvant à cette hauteur. Le crochet 92 vient se caler dans le creux formé derrière les crans 90 qui supportent son poids.

## Revendications

1. Système de siège pour un véhicule léger équipé d'un pédalier (10) assurant son entraînement, comprenant des réglages de position du siège (12), **caractérisé en ce qu'**il comporte des montants (16) prévus pour être fixés dans le véhicule, présentant chacun dans la direction longitudinale du véhicule une extrémité inférieure décalée vers l'avant par rapport à l'extrémité supérieure, donnant une inclinaison à ces montants, et **en ce que** le siège (12) comporte un système de fixation réglable à différentes hauteurs sur ces montants.

2. Système de siège selon la revendication 1, **caractérisé en ce qu'**il comporte deux montants (16) disposés parallèlement, présentant chacun une section circulaire.

3. Système de siège selon la revendication 1 ou 2, **caractérisé en ce que** l'inclinaison des montants (16) vers l'avant présente par rapport à la verticale un angle compris entre 0 et 40°, qui est plus important en descendant.

4. Système de siège selon l'une quelconque des revendications précédentes, **caractérisé en ce que** la face arrière du siège (12) comporte des rainures parallèles de guidage (54) s'ajustant sur les montants (16).

5. Système de siège selon l'une quelconque des revendications précédentes, **caractérisé en ce que** le système de fixation réglable comporte un dispositif de blocage en hauteur sur les montants (16) ne nécessitant pas d'outil pour la manoeuvre.

6. Système de siège selon la revendication 5, **caractérisé en ce que** le dispositif de blocage en hauteur comporte des vis équipées de molettes (68) ajustées dans des rainures verticales (66), qui serrent le siège (12) sur les montants (16).

7. Système de siège selon la revendication 5, **caractérisé en ce que** le dispositif de blocage en hauteur comporte une série de crans (90) liés aux montants (16), espacés en hauteur, présentant une ouverture supérieure tournée vers l'avant recevant un crochet (92) fixé à l'arrière du siège (12).

8. Système de siège selon l'une quelconque des revendications précédentes, **caractérisé en ce que** le siège (12) comporte une structure rigide (44) qui est métallique.

9. Système de siège selon la revendication 8, **caractérisé en ce que** le siège (12) comporte une coque avant (40) et une coque arrière (42) réalisées par un moulage d'une matière plastique, recevant entre elles la structure rigide (44).

10. Véhicule léger équipé d'un pédalier (10) assurant son entraînement, **caractérisé en ce qu'**il comporte pour le conducteur un système de siège selon l'une quelconque des revendications précédentes.
